# EUROPEAN PATENT APPLICATION

(11) **EP 4 135 441 A1**
(43) Date of publication of application: **15.02.2023**
(21) Application number: 20930584.6
(22) Date of filing: 09.04.2020
(51) Int. Cl.: H04W 72/04, H04W 28/04

(54) **TERMINAL, RADIO COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2020/015999
(87) International publication number: WO 2021/205608

(57) **Abstract**

A terminal according to an aspect of the present disclosure includes a receiving section that attempts to receive PDSCHs transmitted repeatedly, in a plurality of downlink shared channel (Physical Downlink Shared Channel (PDSCH)) reception occasions not overlapping in terms of time, and a control section that, when it is configured for a higher layer parameter to time division multiplexing (TDM) scheme A, the higher layer parameter being related to enabling of a repetitive PDSCH transmission scheme and indicated with a demodulation reference signal (DMRS) port within one code division multiplexing (CDM) group in a downlink control information field "Antenna Port," and further if it is indicated with two TCI states by a DCI field "Transmission Configuration Indication (TCI)," judges that a location in a Type-1 Hybrid Automatic Repeat reQuest ACKnowledgement (HARQ-ACK) codebook corresponding to the plurality of PDSCH reception occasions by a single DCI format corresponds to a location for first PDSCH reception and determines that an HARQ-ACK corresponding to at least one of the plurality of PDSCH transmission occasions is included in the location. According to an aspect of the present disclosure, it is possible to appropriately determine an HARQ-ACK codebook even when repetitive PDSCH transmission is employed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, a user terminal (User Equipment (UE)) may transmit HARQ-ACK feedback on an HARQ-ACK codebook by HARQ-ACK codebook basis, each HARQ-ACK codebook being configured of one or more bits of pieces of transmission confirmation information (for example, Hybrid Automatic Repeat reQuest ACKnowledgement (HARQ-ACK)).

In Rel-16 NR, repetitive downlink shared channel (Physical Downlink Shared Channel (PDSCH)) transmission is studied. However, studies have not yet advanced on how the UE configures and reports HARQ-ACK for the repetitive PDSCH transmission. Unless these are clearly defined, appropriate HARQ control is not possible, which may deteriorate communication throughput.

Thus, an object of the present disclosure is to provide a terminal, a radio communication method, and a base station which can appropriately determine an HARQ-ACK codebook even when repetitive PDSCH transmission is employed.

### Solution to Problem

A terminal according to an aspect of the present disclosure includes: a receiving section that attempts to receive PDSCHs transmitted repeatedly, in a plurality of downlink shared channel (Physical Downlink Shared Channel (PDSCH)) reception occasions not overlapping in terms of time; and a control section that, when it is configured for a higher layer parameter to time division multiplexing (TDM) scheme A, the higher layer parameter being related to enabling of a repetitive PDSCH transmission scheme and indicated with a demodulation reference signal (DMRS) port within one code division multiplexing (CDM) group in a downlink control information field "Antenna Port," and further if it is indicated with two TCI states by a DCI field "Transmission Configuration Indication (TCI)," judges that a location in a Type-1 Hybrid Automatic Repeat reQuest ACKnowledgement (HARQ-ACK) codebook corresponding to the plurality of PDSCH reception occasions by a single DCI format corresponds to a location for first PDSCH reception and determines that an HARQ-ACK corresponding to at least one of the plurality of PDSCH transmission occasions is included in the location.

### Advantageous Effects of Invention

According to an aspect of the present disclosure, it is possible to appropriately determine an HARQ-ACK codebook even when repetitive PDSCH transmission is employed.

### Brief Description of Drawings

FIGS. 1A to 1C are diagrams to show an example of generation of a Type-1 HARQ-ACK codebook in Rel-15 NR;
FIG. 2 is a diagram to show an example of repetitive PDSCH transmission in Rel-16 NR;
FIGS. 3A to 3C are diagrams to show examples of a location of an HARQ-ACK for repetitive transmission in TDM scheme A according to one embodiment;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

### Description of Embodiments

### (HARQ-ACK Codebook)

A UE may transmit HARQ-ACK feedback on an HARQ-ACK codebook by HARQ-ACK codebook basis, each HARQ-ACK codebook being configured of one or more bits of pieces of transmission confirmation information (for example, Hybrid Automatic Repeat reQuest ACKnowledgement (HARQ-ACK)), by using a single PUCCH resource. The HARQ-ACK bits may be referred to as HARQ-ACK information, HARQ-ACK information bits, and the like.

Here, an HARQ-ACK codebook may be configured to include bits for HARQ-ACK for at least one unit of a time domain (for example, slots), a frequency domain (for example, component carriers (CCs)), a spatial domain (for example, layers), transport blocks (TBs), and code block groups (CBGs) configuring the TBs. The HARQ-ACK codebook may be referred to simply as a codebook.

Note that the number (size) of bits and the like included in the HARQ-ACK codebook may be determined semi-statically or dynamically. The HARQ-ACK codebook for which the size is determined semi-statically is also referred to as a semi-static HARQ-ACK codebook, a Type-1 HARQ-ACK codebook, and the like. The HARQ-ACK codebook for which the size is determined dynamically is also referred to as a dynamic HARQ-ACK codebook, a Type-2 HARQ-ACK codebook, and the like.

Which one is to be used between the Type-1 HARQ-ACK codebook and the Type-2 HARQ-ACK codebook may be configured for the UE by using a higher layer parameter (for example, pdsch-HARQ-ACK-Codebook).

In a case of Type-1 HARQ-ACK codebook, the UE may feed back, in a certain range (for example, a range configured based on a higher layer parameter), HARQ-ACK bits for PDSCH candidates (or PDSCH occasions) corresponding to the range, irrespective of presence/absence of PDSCH scheduling.

The range may be determined based on at least one of a certain period (for example, a set of a specific number of occasions for PDSCH reception to be candidates, a specific number of downlink control channel (Physical Downlink Control Channel (PDCCH)) monitoring occasions, the number of CCs configured or activated for the UE, the number of TBs (the number of layers or ranks), the number of CBGs per TB, and presence/absence of application of spatial bundling. The specific range is also referred to as an HARQ-ACK window, an HARQ-ACK bundling window, an HARQ-ACK feedback window, and the like.

In the case of the Type-1 HARQ-ACK codebook, as long as a specific range is concerned, the UE reserves the HARQ-ACK bits for a PDSCH in the codebook even when scheduling of the PDSCH for the UE is absent. In a case where the UE determines that the PDSCH is not scheduled in actual, the UE can feed back the bits as NACK bits.

In contrast, in a case of Type-2 HARQ-ACK codebook, the UE may feed back HARQ-ACK bits for a scheduled PDSCH in the specific range.

In Rel-15 NR, the UE determines an HARQ-ACK codebook for a PDSCH corresponding to one or a plurality of slots to be transmitted using a certain PUCCH, based on a value of HARQ-ACK timing.

Timing of transmitting an HARQ-ACK for a dynamic PDSCH (which may be referred to as PDSCH-to-HARQ feedback timing, K₁, and the like) may be indicated by a PDSCH-to-HARQ feedback timing indicator field included in DCI scheduling the dynamic PDSCH (for example, DCI format 1_0/1_1). Assume the last slot in which a certain PDSCH is received is n. In this case, the UE transmits an HARQ-ACK corresponding to the PDSCH in n + K₁ slots.

The UE may determine the size of a window of the semi-statistic HARQ-ACK codebook to be transmitted in a PUCCH of a certain slot (which may be referred to as an HARQ-ACK window), based on the number of slots having the same n + K₁ value.

Next, the UE determines a candidate PDSCH reception occasion (also referred to as a candidate PDSCH occasion or simply as an occasion) for each of slots corresponding to the HARQ-ACK window. Note that candidate PDSCH occasions overlapping UL symbols are excluded from a target of the semi-statistic HARQ-ACK codebook.

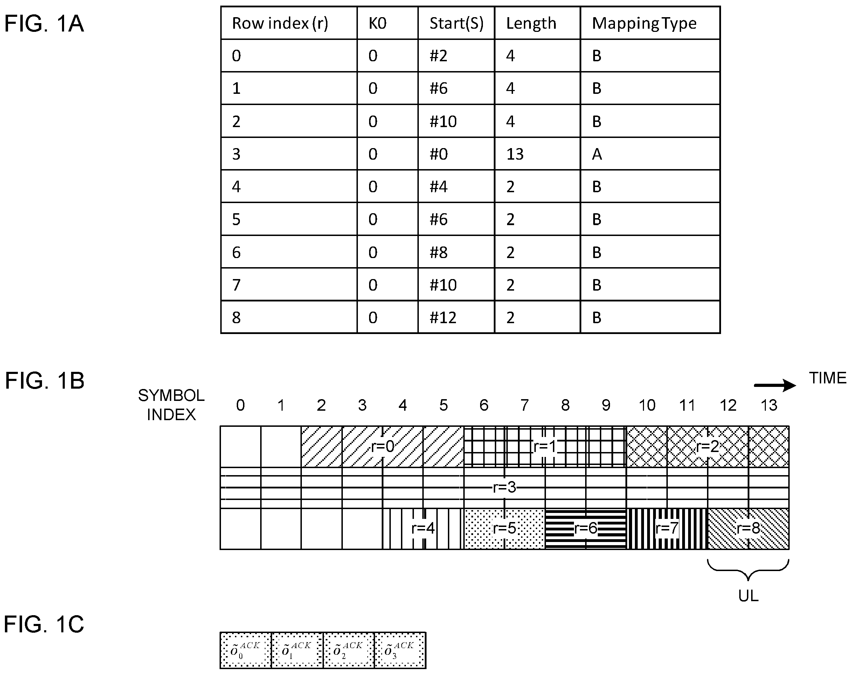

FIGS. 1A to 1C are diagrams to show an example of generation of a Type-1 HARQ-ACK codebook in Rel-15 NR. FIG. 1A is a diagram to show an example of a list related to time domain resource allocation for a PDSCH, the list being configured for a UE or defined in a specification. A row index r in FIG. 1A corresponds to a value of a time domain resource allocation field included in DCI.

K₀ indicates the number of symbols from PDCCH (DCI) reception to PDSCH reception. Start indicates an index S of a starting symbol in a slot of the PDSCH. Length indicates the length (the number of symbols) of the PDSCH. Mapping type indicates the type of resource allocation for the PDSCH (A or B).

FIG. 1B shows candidate PDSCH occasions corresponding to the list in FIG. 1A. For example, the candidate PDSCH occasion corresponding to r = 0 corresponds to a period having the length of four symbols starting from symbol #2.

The UE excludes candidate PDSCH occasions overlapping with UL symbols (for example, symbols configured for UL by a higher layer parameter). In this example, since the last two symbols of this slot are UL symbols, the candidate PDSCH occasions corresponding to r = 2, 3, 8 are excluded, and r being 0, 1, 4, 5, 6, and 7 (r = {0, 1, 4, 5, 6, 7}) in FIG. 1B corresponds to j being 0, 1, 0, 1, 2, and 3 (j = {0, 1, 0, 1, 2, 3}) in a one-to-one correspondence in this order. Here, j denotes an index indicating a bit number of the HARQ-ACK codebook to be transmitted.

For the overlapping candidate PDSCH occasions, the UE can generate only one HARQ-ACK bit under a certain rule. Hence, it is obtained that a set M_{A, c} of candidate PDSCH occasions is 0, 1, 2, and 3 (M_{A, c} = {0, 1, 2, 3}).

Lastly, the UE may determine the number of HARQ-ACK bits, based on the number of elements (also referred to as cardinality) of M_{A, c} above. FIG. 1C is a diagram to show bits of the HARQ-ACK codebook corresponding to FIG. 1B. In FIG. 1C, a total of four bits, i.e., o₀^{ACK} to o₃^{ACK}, are shown. Note that, for simplicity of this specification, a tilde (~) added above "o" of oₖ^{ACK} (k is an integer) is omitted in description, but this notation and the notation with a tilde as shown in the drawings can be interchangeably interpreted.

TB-based HARQ-ACK bits are arranged in order from an earlier (smaller) CC index and then from an earlier (smaller) PDCCH monitoring period. Specifically, o₀^{ACK} to o₃^{ACK} of FIG. 1C may have one-to-one correspondence with M_{A, c} being 0, 1, 2, and 3 (M_{A, c} = {0, 1, 2, 3}) in this order.

Note that FIG. 1C shows the content of the HARQ-ACK codebook corresponding to only one slot in FIG. 1B, but, naturally, in a case of transmitting, in the same slot, HARQ-ACK codebooks corresponding to PDSCHs in a plurality of slots, the number of bits of the HARQ-ACK codebooks may be different from that in FIG. 1C.

### (Repetitive PDSCH Transmission)

In Rel-16 NR, repetitive PDSCH transmission is studied. For example, for PDSCH transmission using a plurality of transmission/reception points (TRPs) (multi-TRP) or a plurality of panels (multi-panel), repetitive PDSCH transmission as that described above may be performed.

The UE may be configured with, for a value of a higher layer parameter related to enabling of a repetitive PDSCH transmission scheme (RepSchemeEnabler), at least one of frequency division multiplexing (FDM) scheme A ('FDMSchemeA'), FDM scheme B ('FDMSchemeB'), time division multiplexing (TDM) scheme A ('TDMSchemeA'), and the like.

In a case where the UE is indicated with two TCI states in a code point of a transmission configuration indication (TCI) (which may be referred to as transmission constitution indication) field of DCI, the UE configured with the TDM scheme A receives two PDSCH transmission occasions of the same TB in each of the TCI states related to the PDSCH transmission occasions. Here, one of the two PDSCH transmission occasions has time domain resource allocation not overlapping with that of the other. Both of the two PDSCH transmission occasions are received in a certain slot.

The UE configured with TDM scheme A and indicated with the two TCI states expects to receive two PDSCH transmission occasions. Here, of the two TCI states, a first TCI state is applied for a first PDSCH transmission occasion, while a second TCI state is applied for a second PDSCH transmission occasion. The two PDSCH transmission occasions correspond to repetitive transmission in TDM scheme A.

Time domain resource allocation for the first PDSCH transmission occasion may be determined according to the time domain resource allocation field of the DCI. Time domain resource allocation for the second PDSCH transmission occasion may have the same number of symbols as that of the first PDSCH transmission occasion.

The UE may determine that the first symbol of the second PDSCH transmission occasion starts after a certain number of symbols from the last symbol of the first PDSCH transmission occasion. The certain number of symbols may be given by a higher layer parameter (StartingSymbolOffsetK) or may be assumed to be 0 by the UE when the higher layer parameter is not given.

The UE need not necessarily expect to receive more than two PDSCH transmission layers for each PDSCH transmission occasion.

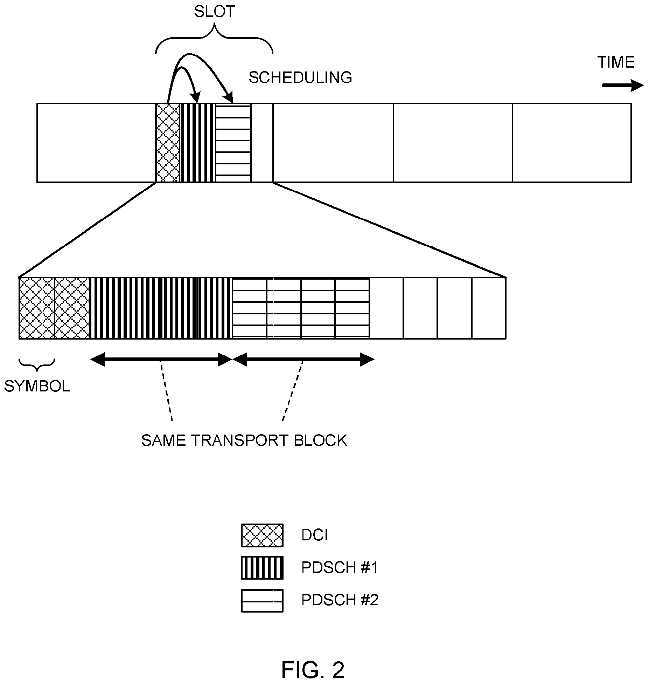

FIG. 2 is a diagram to show an example of repetitive PDSCH transmission in Rel-16 NR. In this example, the UE configured with TDM scheme A receives DCI scheduling repetitive PDSCH transmission (PDSCHs #1 and #2) in a certain slot and receives these PDSCHs according to the DCI, in the slot. PDSCHs #1 and #2 may be the same TB. Note that, in this example, StartingSymbolOffsetK described above is not given to the UE and transmission of PDSCH #2 is started from the symbol immediately after PDSCH #1.

However, studies have not yet advanced on how the UE configured with TDM scheme A and indicated with two TCI states by DCI configures and reports HARQ-ACK for repetitive PDSCH transmission. Unless these are clearly defined, appropriate HARQ control is not possible, which may deteriorate communication throughput.

In view of the above, the inventors of the present invention came up with the idea of a method for appropriately performing HARQ-ACK feedback even when repetitive PDSCH transmission is employed.

Embodiments according to the present disclosure will be described in detail with reference to the drawings as follows. The radio communication methods according to respective embodiments may each be employed individually, or may be employed in combination.

In the following embodiments, a case is assumed that a UE uses a list related to time domain resource allocation for a PDSCH shown in FIG. 1A, to generate a Type-1 HARQ-ACK codebook for a slot configuration (the last two symbols are for UL) in FIG. 1B. It is also assumed that, in repetitive transmission in TDM scheme A, the first PDSCH transmission occasion corresponds to time domain resource allocation with the row index r of 0 (r = 0) and that the second PDSCH transmission occasion is completely overlapped with the time domain resource allocation with the row index r of 1 (r = 1).

Note that it is apparently understood by those skilled in the art that these assumptions are for simplicity of description and the content of the present disclosure is not limited to the cases of the assumptions.

Note that, in the present disclosure, generation, determination, transmission, report, and the like of an HARQ-ACK (or an HARQ-ACK codebook) may be interchangeably interpreted. In the present disclosure, a (candidate) PDSCH transmission occasion, a (candidate) PDSCH reception occasion, and a (candidate) PDSCH occasion may be interchangeably interpreted.

In the present disclosure, description is given by assuming repetitive transmission in TDM scheme A to be two times of repetition (the first PDSCH transmission occasion and the second PDSCH transmission occasion), but two times of repetition may be interpreted as n times (n is an integer) of repetition in each of the embodiments. In this case, the value "2" may be appropriately interpreted as "n."

In the present disclosure, a panel, an Uplink (UL) transmission entity, a TRP, a spatial relation, a control resource set (CORESET), a PDSCH, a codeword, a base station, an antenna port of a certain signal (for example, a demodulation reference signal (DMRS or DM-RS) port), an antenna port group of a certain signal (for example, a DMRS port group), a group for multiplexing (for example, a code division multiplexing (CDM) group, a reference signal group, or a CORESET group), a CORESET pool, a CW, a redundancy version (RV), and a layer (MIMO layer, transmission layer, or spatial layer) may be interchangeably interpreted. A panel Identifier (ID) and a panel may be interchangeably interpreted. In the present disclosure, a TRP ID and a TRP may be interchangeably interpreted.

In the present disclosure, an index, an ID, an indicator, a resource ID, and the like may be interchangeably interpreted.

### (Radio Communication Method)

One embodiment relates to a location (bit location) of each HARQ-ACK for repetitive transmission (repetitive PDSCHs) in TDM scheme A in a semi-static codebook.

A UE may determine a location of HARQ-ACK for repetitive transmission in TDM scheme A, based on any of the following:
- only the first PDSCH transmission occasion (Embodiment 1-1),
- only the second PDSCH transmission occasion (Embodiment 1-2), and
- both the first PDSCH transmission occasion and the second PDSCH transmission occasion (Embodiment 1-3).

In one embodiment, for a set of values K₁ of slot timing, a UE determines a set of candidate PDSCH opportunities or M_{A, c} opportunities for semi-persistent scheduling (SPS) PDSCH resources.

In one embodiment, when a UE is configured by a higher layer parameter (RepSchemeEnabler) set to a TDM Scheme A ('TDMSchemeA'), the higher layer parameter being related to enabling of a repetitive PDSCH transmission scheme and indicated with a DM-RS port(s) within one CDM group in a DCI field "Antenna Port(s)," and further if two TCI states are indicated by a DCI field 'Transmission Configuration Indication,' a location in a Type-1 HARQ-ACK codebook corresponding to two PDSCH reception occasions by a single DCI format is the same as a location for first PDSCH reception ("When a UE is configured by the higher layer parameter RepSchemeEnabler set to 'TDMSchemeA' and indicated DM-RS port(s) within one CDM group in the DCI field "Antenna Port(s)", and if two TCI states are indicated by the DCI field 'Transmission Configuration Indication', a location in the Type-1 HARQ-ACK codebook for HARQ-ACK information corresponding to two PDSCH reception occasions by a single DCI format is same as for the first PDSCH reception").

Note that the "location for the first PDSCH reception" here may mean a location for a first PDSCH reception occasion. The "location for the first PDSCH reception" may be interchangeably interpreted as a location for a second PDSCH reception, a location for the last PDSCH reception, a location for a specific (for example, the n-th) PDSCH reception, and the like. The "location" here may be interpreted as a plurality of locations, and in this case, the "location for the first PDSCH reception" may be interpreted as a location for the first PDSCH reception and a location for the second PDSCH reception and the like.

### {TB-based Repetitive Transmission}

The UE may generate an HARQ-ACK of only one bit for repetitive transmission in TDM scheme A. In other words, an HARQ-ACK of one bit may be generated for each TB of TDM scheme A. In this case, the UE may determine the location of HARQ-ACK for repetitive transmission in TDM scheme A, based only on the first PDSCH transmission occasion or based only on the second PDSCH transmission occasion.

The UE may generate an HARQ-ACK of two bits for repetitive transmission in TDM scheme A. In other words, an HARQ-ACK of two bits may be generated for each TB of TDM scheme A. In this case, the UE may determine the location of HARQ-ACK for repetitive transmission in TDM scheme A, based on both the first PDSCH transmission occasion and the second PDSCH transmission occasion.

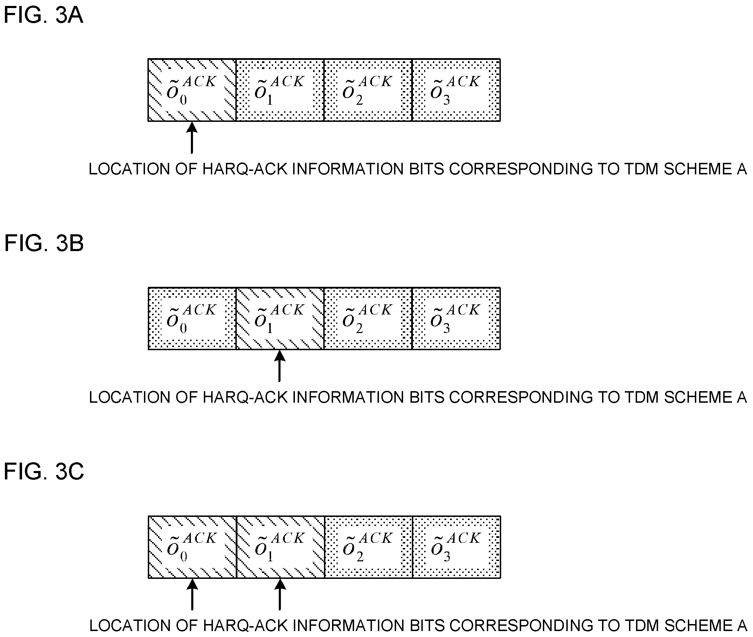

FIGS. 3A to 3C are diagrams to show examples of a location of an HARQ-ACK for repetitive transmission in TDM scheme A according to one embodiment.

FIG. 3A shows an example (Embodiment 1-1 above) in which the location of the HARQ-ACK is determined based only on the first PDSCH transmission occasion. In this example, the location of the HARQ-ACK is a location o₀^{ACK} corresponding to the first PDSCH transmission occasion M_{A, c} being 0 (M_{A, c} = 0) (r = 0) . Here, o₁^{ACK} may be used to indicate an HARQ-ACK corresponding to M_{A, c} being 1 (M_{A, c} = 1) (r = 1) not related to repetitive transmission in TDM scheme A.

FIG. 3B shows an example (Embodiment 1-2 above) in which the location of the HARQ-ACK is determined based only on the second PDSCH transmission occasion. In this example, the location of the HARQ-ACK is a location o₁^{ACK} corresponding to the second PDSCH transmission occasion M_{A, c} being 1 (M_{A, c} = 1) (r = 1) . Here, o₀^{ACK} may be used to indicate an HARQ-ACK corresponding to M_{A, c} being 0 (M_{A, c} = 0) (r = 0) not related to repetitive transmission in TDM scheme A.

FIG. 3C shows an example (Embodiment 1-3 above) in which the location of the HARQ-ACK is determined based on both the first PDSCH transmission occasion and the second PDSCH transmission occasion. In this example, the location of the HARQ-ACK includes a location o₀^{ACK} corresponding to the first PDSCH transmission occasion M_{A, c} being 0 (M_{A, c} = 0) (r = 0) and a location o₁^{ACK} corresponding to the second PDSCH transmission occasion M_{A, c} being 1 (M_{A, c} = 1) (r = 1) .

When a higher layer parameter related to CBG transmission for PDSCH (PDSCHCodeBlockGroupTransmission) is not given, the UE may generate one or two HARQ-ACK bits per TB for repetitive transmission in TDM scheme A according to at least one of Embodiment 1-1 to Embodiment 1-3 above and determine the location of the HARQ-ACK, based on one of or both the first PDSCH transmission occasion and the second PDSCH transmission occasion.

### {CBG-based Repetitive Transmission}

When the higher layer parameter related to CBG transmission for PDSCH (PDSCHCodeBlockGroupTransmission) is given, the UE may determine an HARQ-ACK codebook according to the content obtained by interpreting, as N^{CBG/TB, max}_{HARQ-ACK, c} HARQ-ACK bits, one HARQ-ACK bit per TB in the descriptions related to Embodiment 1-1 to Embodiment 1-3 above, for repetitive transmission in TDM scheme A. Here, N^{CBG/TB, max}_{HARQ-ACK, c} may correspond to the maximum number of CBGs per TB and may be configured by a higher layer parameter maxCodeBlockGroupsPerTransportBlock, for example.

When CBG-based repetitive transmission in TDM scheme A is performed, the UE may receive N^{CBG/TB, max}_{HARQ-ACK, c} CBGs in each of PDSCH transmission occasions included in the repetitive transmission. In other words, the above-described N^{CBG/TB, max}_{HARQ-ACK, c} HARQ-ACK bits may correspond to the respective HARQ-ACKs for the different CBGs in one TB.

Note that, in the present disclosure, each CBG may be interchangeably interpreted as a code block (CB).

According to the one embodiment described above, the UE can appropriately specify a location of each HARQ-ACK for repetitive transmission in TDM scheme A and generate a Type-1 HARQ-ACK codebook. A base station understanding this configuration can appropriately control transmission/reception processing without any discrepancy in terms of codebook between the UE and the base station.

### <Others>

The description has been given by assuming the case employed when the UE is configured with a semi-static codebook (Type-1 HARQ-ACK codebook) in each of the above-described embodiments, each of the embodiments may be applied when the UE is configured with a dynamic codebook (Type-2 HARQ-ACK codebook).

Note that each of the above-described embodiments may be applied when (an operation of) a multi-TRP or a multi-panel is configured or not configured for the UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

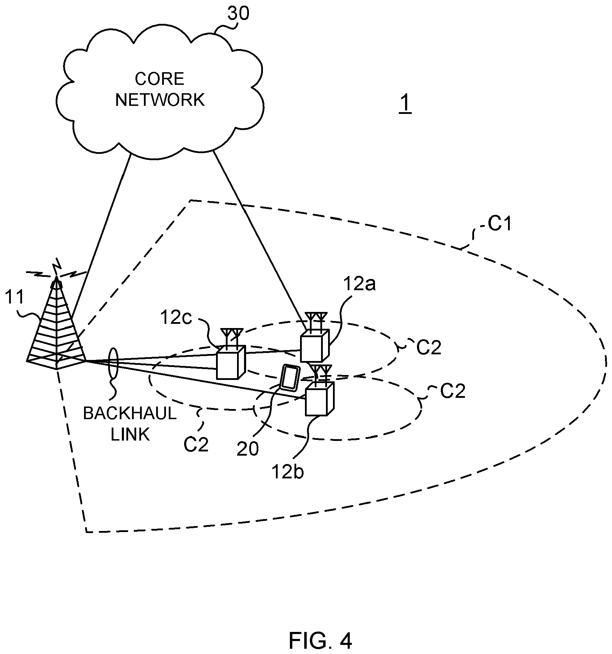

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

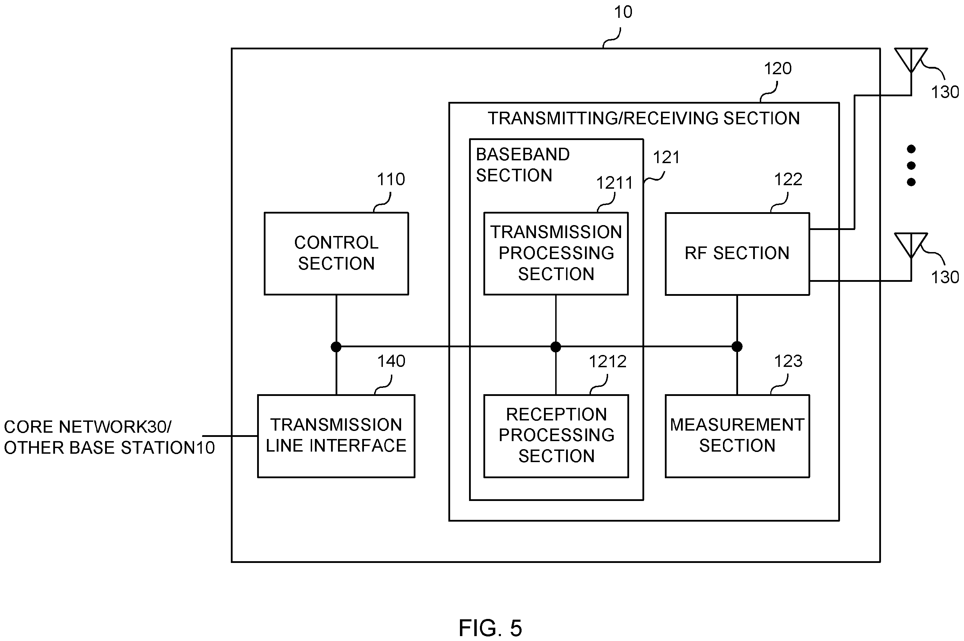

FIG. 5 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate a bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may repeatedly transmit PDSCHs in a plurality of downlink shared channel (Physical Downlink Shared Channel (PDSCH)) transmission occasions not overlapping in terms of time.

The control section 110 may receive a Type-1 Hybrid Automatic Repeat reQuest ACKnowledgement (HARQ-ACK) codebook obtained by the user terminal 20 judging that a location in a Type-1 HARQ-ACK codebook corresponding to the plurality of PDSCH reception occasions by a single DCI format corresponds to a location for first PDSCH reception and configuring the Type-1 HARQ-ACK codebook to include an HARQ-ACK corresponding to at least one of the plurality of PDSCH transmission occasions in the location, the user terminal 20 being configured for a higher layer parameter to time division multiplexing (TDM) scheme A, the higher layer parameter being related to enabling of a repetitive PDSCH transmission scheme, the user terminal 20 being indicated with a demodulation reference signal (DMRS) port(s) within one code division multiplexing (CDM) group in a downlink control information field "Antenna Port(s)" and further indicated with two TCI states by a DCI field "Transmission Configuration Indication (TCI)."

### (User Terminal)

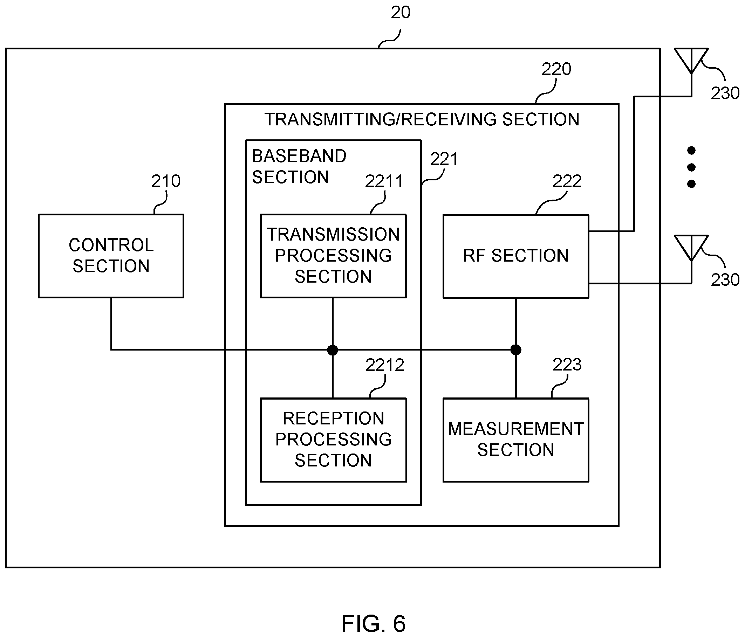

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the transmission line interface 240.

Note that the transmitting/receiving section 220 may attempt to receive PDSCHs transmitted repeatedly, in a plurality of downlink shared channel (Physical Downlink Shared Channel (PDSCH)) reception occasions not overlapping in terms of time.

When it is configured for a higher layer parameter to time division multiplexing (TDM) scheme A, the higher layer parameter being related to enabling of a repetitive PDSCH transmission scheme and indicated with a demodulation reference signal (DMRS) port(s) within one code division multiplexing (CDM) group in a downlink control information field "Antenna Port(s)," and further if it is indicated with two TCI states by a DCI field "Transmission Configuration Indication (TCI)," the control section 210 may judge that a location in a Type-1 Hybrid Automatic Repeat reQuest ACKnowledgement (HARQ-ACK) codebook corresponding to the plurality of PDSCH reception occasions by a single DCI format corresponds to a location for the first PDSCH reception and determine that an HARQ-ACK corresponding to at least one of the plurality of PDSCH transmission occasions is included in the location.

The transmitting/receiving section 220 may transmit, to the base station 10, the Type-1 HARQ-ACK codebook (semi-static HARQ-ACK codebook) including the HARQ-ACK corresponding to at least one of the plurality of PDSCH transmission occasions in the location.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

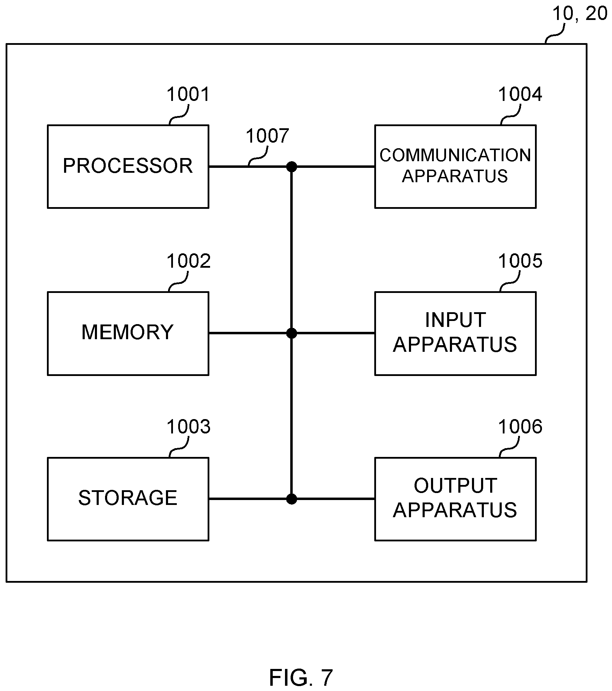

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that attempts to receive PDSCHs transmitted repeatedly, in a plurality of downlink shared channel (Physical Downlink Shared Channel (PDSCH)) reception occasions not overlapping in terms of time; and
a control section that, when it is configured for a higher layer parameter to time division multiplexing (TDM) scheme A, the higher layer parameter being related to enabling of a repetitive PDSCH transmission scheme and indicated with a demodulation reference signal (DMRS) port within one code division multiplexing (CDM) group in a downlink control information field "Antenna Port," and further if it is indicated with two TCI states by a DCI field "Transmission Configuration Indication (TCI)," judges that a location in a Type-1 Hybrid Automatic Repeat reQuest ACKnowledgement (HARQ-ACK) codebook corresponding to the plurality of PDSCH reception occasions by a single DCI format corresponds to a location for first PDSCH reception and determines that an HARQ-ACK corresponding to at least one of the plurality of PDSCH transmission occasions is included in the location.

2. A radio communication method for a terminal, the radio communication method comprising:
attempting to receive PDSCHs transmitted repeatedly, in a plurality of downlink shared channel (Physical Downlink Shared Channel (PDSCH)) reception occasions not overlapping in terms of time; and
when it is configured for a higher layer parameter to time division multiplexing (TDM) scheme A, the higher layer parameter being related to enabling of a repetitive PDSCH transmission scheme and indicated with a demodulation reference signal (DMRS) port within one code division multiplexing (CDM) group in a downlink control information field "Antenna Port," and further if it is indicated with two TCI states by a DCI field "Transmission Configuration Indication (TCI)," judging that a location in a Type-1 Hybrid Automatic Repeat reQuest ACKnowledgement (HARQ-ACK) codebook corresponding to the plurality of PDSCH reception occasions by a single DCI format corresponds to a location for first PDSCH reception and determining that an HARQ-ACK corresponding to at least one of the plurality of PDSCH transmission occasions is included in the location.

3. A base station comprising:
a transmitting section that repeatedly transmits PDSCHs in a plurality of downlink shared channel (Physical Downlink Shared Channel (PDSCH)) transmission occasions not overlapping in terms of time; and
a receiving section that receives a Type-1 Hybrid Automatic Repeat reQuest ACKnowledgement (HARQ-ACK) codebook obtained by a terminal judging that a location in a Type-1 HARQ-ACK codebook corresponding to the plurality of PDSCH reception occasions by a single DCI format corresponds to a location for first PDSCH reception and configuring the Type-1 HARQ-ACK codebook to include an HARQ-ACK corresponding to at least one of the plurality of PDSCH transmission occasions in the location, the terminal being configured for a higher layer parameter to time division multiplexing (TDM) scheme A, the higher layer parameter being related to enabling of a repetitive PDSCH transmission scheme, the terminal being indicated with a demodulation reference signal (DMRS) port within one code division multiplexing (CDM) group in a downlink control information field "Antenna Port" and further indicated with two TCI states by a DCI field "Transmission Configuration Indication (TCI)."
